# FASCICULE DE BREVET EUROPEEN

(11) **EP 1 676 172 B1**
(45) Date de publication et mention de la délivrance du brevet: **05.08.2009**
(21) Numéro de dépôt: 04787296.5
(22) Date de dépôt: 02.09.2004
(51) Int. Cl.: G03B 21/56, G03B 21/60

(54) **ECRAN DE PROJECTION, NOTAMMENT POUR LA VIDEOPROJECTION REDUISANT L'EFFET MOIRE**
PROJEKTIONSSCHIRM HAUPTSÄCHLICH FÜR VIDEOPROJEKTION ZUR VERRINGERUNG DES MOIRE-EFFEKTS
PROJECTION SCREEN, PRIMARILY FOR VIDEO PROJECTION THAT REDUCES THE MOIRE EFFECT

(30) Priorité: 02.09.2003 FR 0310375
(43) Date de publication de la demande: 05.07.2006
(73) Titulaire: SCREEN RESEARCH, 44240 La Chapelle sur Erdre (FR)
(72) Inventeur: CONGARD, Patrice, F-75020 Paris (FR); TRELOHAN, Yves, F-44240 Orvault (FR)
(74) Mandataire: Quantin, Bruno Marie Henri
(86) Numéro de dépôt international: PCT/FR2004/002241
(87) Numéro de publication internationale: WO 2005/024506

(56) Documents cités:
- EP-A- 0 438 161
- CH-A- 206 978
- US-A- 1 846 357
- US-A- 1 877 941
- US-A- 1 878 075
- US-A- 1 959 434
- PATENT ABSTRACTS OF JAPAN vol. 015, no. 347 (P-1246), 3 septembre 1991 (1991-09-03) & JP 03 130746 A (SHARP CORP), 4 juin 1991 (1991-06-04)

## Description

L'invention concerne un écran de projection, notamment destiné aux applications vidéo. Plus précisément, elle vise un écran perméable aux ondes sonores.

On connaît les avantages des écrans perméables aux ondes sonores, qui permettent le placement de sources sonores derrière l'écran, permettant ainsi une cohérence perceptible entre l'image projetée et le son (que cette image soit projetée par l'avant ou par l'arrière).

Ces avantages sont notamment décrits dans le document FR 2810122 (CONGARD) ou ses équivalents EP-1162499 ou US - 6552847.

Une telle disposition des sources sonores, en pratique des enceintes acoustiques, derrière un écran est d'ailleurs courante dans les salles de cinéma. L'écran y est classiquement perforé de petits trous destinés à laisser passer le son (voir par exemple le document US-1,878,075 de 1932).

Dans des applications vidéo, et en particulier dans des applications domestiques, la visibilité des trous est souvent accrue par la proximité des spectateurs par rapport à l'écran. En effet, la dimension et l'espacement de ces trous sont traditionnellement déterminés par les outils utilisés pour les réaliser, indépendamment de la taille de l'écran.

Certains fabricants ont récemment mis en oeuvre des outils permettant de réduire à la fois la dimension des perforations et leur espacement, tout en préservant un rapport de surface perforée/surface totale d'écran sensiblement constant.

Des écrans à technologie dite « tissée » sont également employés pour ces applications.

Depuis peu, une grande majorité des projecteurs vidéo sont du type à matrice de pixels fixes, mettant en oeuvre par exemple la technique dite "DLP" (Digital Light Processor), ou "LCD" (Liquid Crystal Display). Ces projecteurs à pixels fixes décomposent l'image vidéo en éléments individuels qui sont chacun affectés d'une couleur et d'une valeur.

De tels projecteurs projettent une image dont les rangées de pixels sont visibles dans certaines conditions, notamment si on regarde l'image à une distance inférieure à celle qui est recommandée. Les rangées de pixels apparaissent notamment par des alignements orthogonaux des séparations entre pixels, parallèles aux bords de l'image.

En pratique, il se trouve que l'ordre de grandeur des espacements entre les trous des écrans vidéo perforés et les dimensions d'un pixel projeté sont souvent similaires. Il en résulte des interférences visibles entre deux alignements périodiques, produisant des effets de moiré indésirables. Il a déjà été proposé que les trous soient disposés en quinconce pour en minorer la visibilité, mais avec des résultats mitigés.

Une des solutions de contournement consiste à ajuster la distance entre le projecteur et l'écran de projection, ce qui fait varier la taille de l'image projetée, et donc la taille des pixels, afin de repérer les positions qui génèrent le moins d'effet de moiré. Les résultats sont mitigés, et ne permettent pas de garantir qu'un changement de projecteur, par exemple disposant d'un définition plus élevée, donc d'une taille de pixel différente, ne génère pas à nouveau des phénomènes de moirage.

Ces effets indésirables se retrouvent également sur les écrans tissés. En effet, quand la structure de la toile fait apparaître des espacements ou des effets d'ombre projeté, l'alignement périodique de ceux-ci génèrent les mêmes effets de moiré indésirables que dans le cas des écrans vidéo perforés.

Les différentes technologies développées ayant eu pour but d'obtenir un bon compromis entre la qualité d'image et la perméabilité aux ondes sonores, mais m'ayant pas pris en compte les risques d'effets de résonances (moirages) avec les technologies de type à matrice fixe, se sont donc révélées incapables d'aboutir à des résultats vraiment bons.

Dans le cas où la planéité de l'écran et/ou sa normalité à l'axe de projection ne sont pas parfaits, ce qui est en pratique le cas dans beaucoup d'installations, les effets de moiré sont encore beaucoup plus importants, d'où des résultats encore moins bons.

Pour ces raisons, les écrans perméables au son sont couramment considérés comme difficilement compatibles avec les projecteurs à pixels fixes, c'est à dire en pratique avec la très grande majorité des projecteurs disponibles, notamment pour la vidéo.

On connaît d'après le document JP-03 130 746 A, un écran adapté à minimiser les effets de moiré en combinaison avec un projeteur à pixels. Un tel écran est formé d'un tissage de fibres de verre intercalé et fixé entre une fine feuille avant réfléchissante, !en aluminium, et une feuille arrière en matière plastique. La minimisation de l'effet de moiré, pouvant découler des déformations de la feuille avant du fait du tissage, est obtenue en inclinant les fils du tissage par rapport aux bords de l'écran. Mais cet écran n'est pas perméable aux ondes sonores.

L'objet de la présente invention est de proposer un écran qui soit perméable aux ondes sonores et qui ne produise que peu, ou pas du tout, d'interférence optique visible dans le cas où il est utilisé avec un projecteur du type à pixels fixes, tout en étant simple et peu coûteux, pouvant être tendu sur un cadre ou au contraire être du type enroulable.

L'invention propose à cet effet une installation selon la revendication 1.

Ainsi, la disposition des passages de cette pluralité est telle que, si on peut y détecter des alignements, au moins les principaux d'entre eux présentent une inclinaison non nulle par rapport aux bords verticaux et horizontaux de l'écran.

On dira, selon l'invention, que s'il y a des alignements, les principaux d'entre eux sont ceux qui sont les plus denses, c'est-à-dire ceux qui présentent le plus de passages par unité de longueur.

Il est en effet apparu que cette absence de parallélisme aux bords de l'écran (donc l'existence de cette Inclinaison) annule ou minimise fortement les effets indésirables de moirage, en diminuant les risques de coïncidence entre les alignements verticaux et horizontaux des structures de pixels de l'image projetée, et la structure de passages ou de trame de l'écran de projection, puisque les côtés de cet écran sont en pratique parallèles aux bords de l'image projetée.

L'inclinaison non nulle est de préférence supérieure à 5°, voire à 10 °, par exemple choisie entre 5° et 25°.

Dans le cas où les passages ou l'éventuelle trame de la feuille forment de nombreux alignements, ceux-ci seront inclinés de façon à ce qu'aucun de ces alignements, ou le moins possible d'entre eux, ne soit parallèle aux bords verticaux et horizontaux de l'écran.

Cette feuille est de préférence réalisée à partir d'une pluralité de fils, ou par un procédé simulant l'apparence d'un réseau de fils (par exemple par moulage de matière plastique, ou par entaillage et déployage d'une feuille en matériau plein), mais peut aussi être réalisée à partir d'une feuille pleine perforée de petits trous.

Le risque d'interférences est encore diminué quand cette pluralité de passages ou la trame présente des variations substantielles de géométrie ou d'orientation.

En effet, ces variations substantielles de géométrie ou d'orientation ont pour conséquence qu'il y a, vis-à-vis d'un faisceau lumineux dirigé vers la face de projection, des interactions physiques différentes d'un passage à l'autre, ce qui réduit encore les effets de moiré.

Ces variations peuvent exister au niveau des passages pris individuellement, par exemple en raison de l'usage de fils non lisses, par exemple de fils bouclés (les contours des passages sont ainsi irréguliers, y compris sur leur longueur) et/ou en raison d'un traitement de la feuille, tel qu'un traitement d'apprêt (les contours de ces passages sont modifiés par rapport à leur forme initiale sous l'apprêt). C'est ainsi que la feuille est avantageusement un crêpe (tissage ou tricot souvent réalisé à l'aide d'un fil bouclé et/ou ondulé, et ayant fait l'objet d'un traitement d'apprêt).

Les variations peuvent aussi exister d'un passage à l'autre.

C'est ainsi que ces variations peuvent résulter d'une différence de forme ou d'orientation (dans le plan de la feuille) d'un passage à l'autre : ainsi les passages peuvent par exemple avoir une forme allongée avec de plus grandes dimensions dont l'orientation varie d'un trou à l'autre. Ainsi, même si les emplacements des passages forment un réseau périodique, ceux des passages qui sont strictement identiques et réagissent ainsi de manière identique aux faisceaux lumineux Incidents forment un réseau bien plus grand que celui des emplacements des passages, ce qui, sans vouloir être limité par cette interprétation semble intéressant pour réduire les risques de moiré. Ces variations peuvent en effet être des fluctuations éventuellement périodiques.

Ces variations peuvent aussi résulter de différences d'orientation des passages par rapport au plan de la feuille, par exemple en raison de l'existence de motifs superficiels, à une ou plusieurs dimensions ; un motif à plusieurs dimensions est par exemple un motif en losange ou en rectangle, tandis qu'un motif à une dimension est par exemple un réseau linéaire d'ondulations, par exemple un ensemble de côtes. Ainsi, même si les passages sont réalisés en des emplacements formant un réseau périodique, les ondulations de surface font que, vis-à-vis des faisceaux lumineux, ces passages réagissent différemment.

La feuille peut être avantageusement réalisée en tweed, ce qui conduit à des passages (de formes différentes) sensiblement alignés selon plusieurs directions inclinées du plan de la feuille, par exemple selon une disposition en chevron (les fils tissés ont un trajet en zig-zag).

Une autre forme de tissage correspond à un tissage de fils individuels, selon une direction, et de fils doubles, selon une autre direction, ce qui combine les avantages de formes différentes de passages à ceux d'ondulations de surface (des lignes en relief, selon une direction inclinée par rapport à chacune des directions globales des fils tissés). Il peut être noté qu'un tel tissage est similaire à celui des jeans.

Des écrans tissés selon un grand nombre de configurations possibles sont décrits dans le document EP-0 438 161 A2, qui préconise que la surface de projets soit un tissu qui n est pas recouvert d'une couche de réflexion, et qui présente en face avant des fils clairs d'un premier système de fils qui s'étendent selon une direction qui est verticale en service, de manière à obtenir des propriétés anisotropes de réflexion. Il peut y avoir un revêtement arrière. Mais aucune performance de perméabilité aux sons ou de minimisation d'un effet de moiré n'est visée ou mentionnée.

Il peut être souligné qu'en pratique, les passages d'une feuille selon l'invention ne sont pas ou peu apparents pour un spectateur situé à une distance et suivant une direction de visualisation usuelles (typiquement de l'ordre d'une fois et demie la largeur de l'écran, même dans le cas d'une application domestique, donc avec des écrans petits).

La feuille peut être réalisée à partir de fils textiles, mais aussi à partir de fils en matière plastique, par exemple en polyester, avantageusement du polyester bouclé. Les fils peuvent être assemblés par tissage ou par tout autre procédé, comme par exemple le tricot. La feuille peut être aussi en non tissé.

Selon des dispositions préférées de l'invention, exclusives les unes des autres ou au contraire, éventuellement combinées :
- la dite feuille est pleine mais perforée ;
- ladite feuille est tissée ;
- ladite feuille est un tissage d'un nombre différent de fils de fils de chaîne et de fils de trame ;
- des espacements entre les fils ne dépassent pas 0.3 mm.
- la feuille présente, sur la face de projection des côtes inclinées par rapport aux directions générales des fils de traîne et de trame ;
- le tissage utilise du fil enrobé de polyvinyle chlorure ;
- ladite feuille est en fil tricotée ;
- le fil est bouclé ;
- le fil est en polyester ;
- aucune trame n'est apparente ;
- ladite surface est en crêpe ;
- la feuille est tissée et est du type satiné ;
- la feuille est tissée et est du type tweed ;
- l'écran de projection comporte une deuxième couche sensiblement superposée à la première, placée derrière ladite première couche par rapport au flux lumineux du projecteur, ladite deuxième couche étant perméable aux ondes sonores..

L'invention propose également une installation du type précité, avec une source lumineuse disposée devant l'écran.

Des objets, caractéristiques et avantages de l'invention ressortent de la description donnée ci-dessous, à titre d'exemple illustratif non limitatif, en regard des dessins annexés sur lesquels :
- la figure 1 est une vue globale en perspective d'un écran de projection perméable au son placé devant une source sonore,
- la figure 2 est une vue frontale agrandie montrant un matériau d'écran de l'art antérieur,
- la figure 3 est une vue frontale d'un tissu classique du type toile,
- la figure 4 est une vue frontale d'un tissu constituant, après inclinaison dans son plan, un écran selon un premier mode de réalisation de l'invention,
- la figure 5 est une vue frontale d'une première face d'un tissu constituant un écran selon un deuxième mode de réalisation de l'invention, avec un éclairage formant un angle d'environ 45° par rapport à la normale au plan de l'écran,
- la figure 6 est une vue de la deuxième face (arrière) du même tissu, avec le même éclairage,
- la figure 7 est une vue frontale d'un tissu identique à celui de la Fig.5, avec un éclairage de direction normale au plan de l'écran et passant par son centre,
- la figure 8 est une vue frontale d'un tissu constituant un écran selon un troisième mode de réalisation de l'invention,
- la figure 9 est un schéma indiquant une orientation préférée d'un matériau tel que ceux des figures 2, 3 ou 4, par rapport aux bords de l'écran,
- La figure 10 est un schéma d'écran perforé, indiquant une orientation préférée des alignements de perforations par rapport aux bords de l'écran ; et.
- La figure 11 est un schéma d'écran perforé plus complexe (en quinconce), indiquant des alignements multiples par rapport aux bords de l'écran.

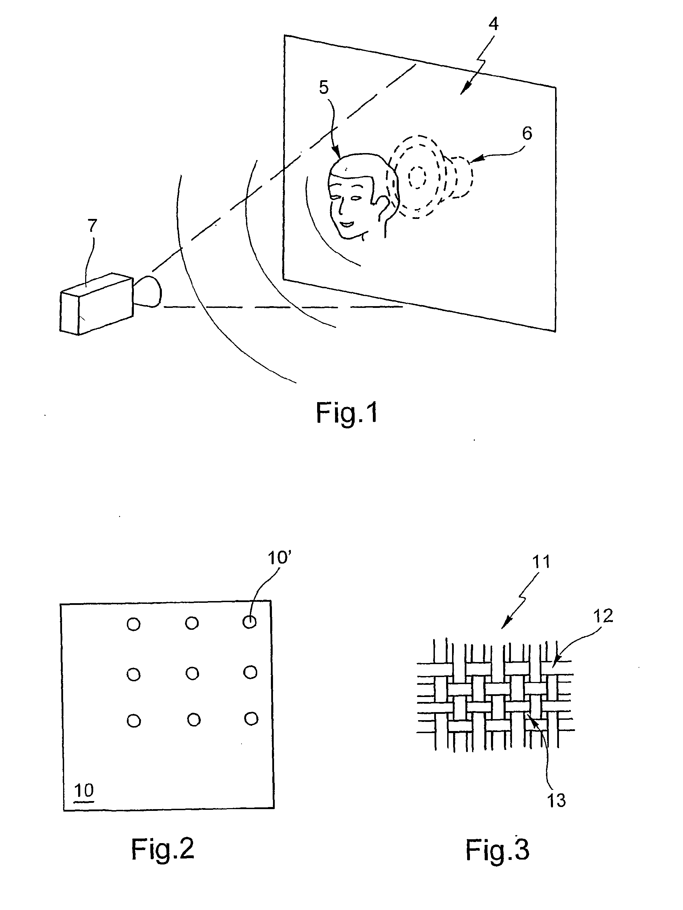

La figure 1 représente schématiquement un écran 4 de projection perméable aux ondes sonores. Une image 5 est projetée sur l'écran 4, représentant une personne en train de parler. Une source sonore 6 (représentée en pointillés) est placée derrière l'écran 4, sensiblement en son centre. La source sonore 6 diffuse l'enregistrement sonore effectué de la personne en train de parler au moment de l'enregistrement de l'image, le plus souvent en vidéo. L'image est ici projetée par l'avant (projecteur 7) mais peut, an variante, être projetée par l'arrière.

Les enregistrements d'image et de son sont synchronisés.

Cette disposition, classique, est destinée à reproduire simultanément le son et l'image de manière cohérente. Le placement de la source sonore en tout autre endroit annulerait cette cohérence, ce qui nuirait à la qualité globale de la reproduction des enregistrements de son et d'image synchronisés.

La disposition représentée à la figure 1 est classique, et se trouve dans la plupart des salles de cinéma, souvent améliorée par la présence de deux autres sources sonores droite et gauche (non représentées) pour une reproduction stéréophonique du son.

Mais la disposition représentée à la figure 1 n'est possible que si l'écran est constitué d'un matériau perméable aux ondes sonores.

Selon une configuration connue schématisée à la figure 2, un tel matériau est le plus généralement constitué d'une feuille mince (0.2 à 0.7 mm) de matière plastique, généralement du PVC. Cette feuille 10 est perforée d'une pluralité de trous 10' répartis de manière homogène sur toute la surface de l'écran suivant un pas régulier de 8 à 15 mm. Les trous 10' présentent un diamètre de 0.8 à 1.5 mm. Ces trous sont prévus dans le matériau formant écran pour permettre la perméabilité au son, qui n'est pas inhérente à la nature du matériau. On trouve généralement des écrans de ce genre dans les salles de cinéma.

Si de tels écrans donnent généralement satisfaction dans les installations de salles de cinéma, il n'en est pas de même dans les installations domestiques de projection vidéo. En effet, les développements récents des applications vidéo, notamment à usage domestique, ont mis en évidence les limitations de ce genre d'écrans. Dans de telles applications, les spectateurs se trouvent plus près de l'écran que dans une salle de cinéma, les écrans étant eux-mêmes plus petits (180 à 320 cm de base, dans la plupart des cas). Les trous de cet ordre de grandeur deviennent alors visibles aux distances habituelles de vision (3 à 10 m).

Un perfectionnement a été apporté aux écrans réalisés en feuille de plastique perforé, avec des trous qui sont de plus petit diamètre (typiquement 0.5 mm), et disposés suivant un pas plus petit (typiquement 5mm), afin de préserver une perméabilité au son acceptable. Par ailleurs, pour tenter de réduire la visibilité indésirable de ces trous, il a été proposé de les disposer en quinconce. Des écrans ainsi perfectionnés offrent globalement, en vidéo et sur des dimensions comprises entre 2 m et 3.5 m de base, une qualité d'image légèrement supérieure à celle obtenue avec les écrans perforés traditionnels du cinéma, mais sans réussir à éviter les phénomènes de moirage (voir ci-dessous).

En outre, leur perméabilité au son reste faible, et ne peut s'améliorer qu'au détriment de la qualité d'image (une plus grande densité de perforations dans la surface de projection entraîne une réduction de la surface réfléchissante).

Le développement des projecteurs vidéo à pixels fixes, qui offrent de nombreux avantages par rapport aux projecteurs antérieurs à balayage, a, en effet, posé un problème de compatibilité avec les écrans perforés.

En effet, les projecteurs à pixels fixes comportent un nombre de pixels déterminé, disposés suivant une matrice en rangées et colonnes. Les délimitations entre les rangées et colonnes de pixels se distinguent comme des zones monochromes de valeur constante, formant ainsi des lignes visibles projetées sur l'écran.

Suivant les rangées et les colonnes de la matrice de pixels, ces lignes forment une grille orthogonale, peu gênante en elle-même lorsque la distance d'observation est suffisante (on considère couramment une distance d'observation comme suffisante lorsque la dimension d'un pixel projeté est égale ou inférieure à la limite de visibilité, située entre 1 et 5 minutes d'arc, selon les individus).

La superposition de la grille projetée et du réseau formé par les trous d'une toile perforée, disposés en alignements réguliers horizontaux et verticaux, crée des interférences optiques connues sous le nom de moirage, produisant des lignes à la fois plus larges et plus espacées que les pas des grilles projetées ou des alignements de trous. De tels moirages sont très visibles, et parasitent l'image.

De plus, si le plan défini par la surface de projection n'est pas exactement normal à l'axe de projection, ou si sa planéité est imparfaite, les lignes visibles de moirage ne sont plus parallèles aux lignes des grilles qui les produisent. Ceci en augmente encore la visibilité.

Par ailleurs, lors de la projection d'images vidéo en mouvement, l'alternance de scènes sombres, masquant la grille projetée, et de scènes claires, rend le moirage intermittent, et donc encore plus visible, car ne produisant pas d'accoutumance.

Ce phénomène a amené de nombreux utilisateurs d'écrans à conclure que les écrans perforés sont difficilement compatibles avec les projecteurs à pixels fixes.

La figure 3 représente schématiquement des écrans tissés 11 offrant une bonne perméabilité acoustique, mais généralement au détriment de la qualité de reproduction de l'image vidéo. Les trames 12 sont suffisamment espacées pour ménager des passages en interstries 13 offrant une bonne perméabilité au son. De tels écrans tissés ont un aspect de grille visible, apte à interférer optiquement avec les grilles projetées par les projecteurs vidéo à pixels fixes. Il peut être noté que le tissage est très simple, limité au croisement de fils individuels selon deux directions perpendiculaires ; ce type particulièrement simple de tissage est souvent appelé "toile". Les fils ont par exemple un diamètre de 0,5 mm.

Les figures suivantes correspondent à diverses possibilités d'arrangement de fils, textiles ou en matière plastique, tricotés, tissés, non-tissés ou assemblés de toute autre manière, qui permettent selon l'invention de réduire sensiblement les effets de moiré.

Ces arrangements ont en commun de comporter une feuille ayant une face de projection et munie d'une pluralité de passages adaptés à permettre la traversée de cette feuille par des ondes sonores, la disposition de cette pluralité de passages étant telle que, si on peut y détecter des alignements, au moins les principaux d'entre eux présentent une inclinaison non nulle par rapport aux bords de l'écran. En outre, pour plusieurs d'entre eux, la pluralité de passage présente des variations substantielles de géométrie ou d'orientation.

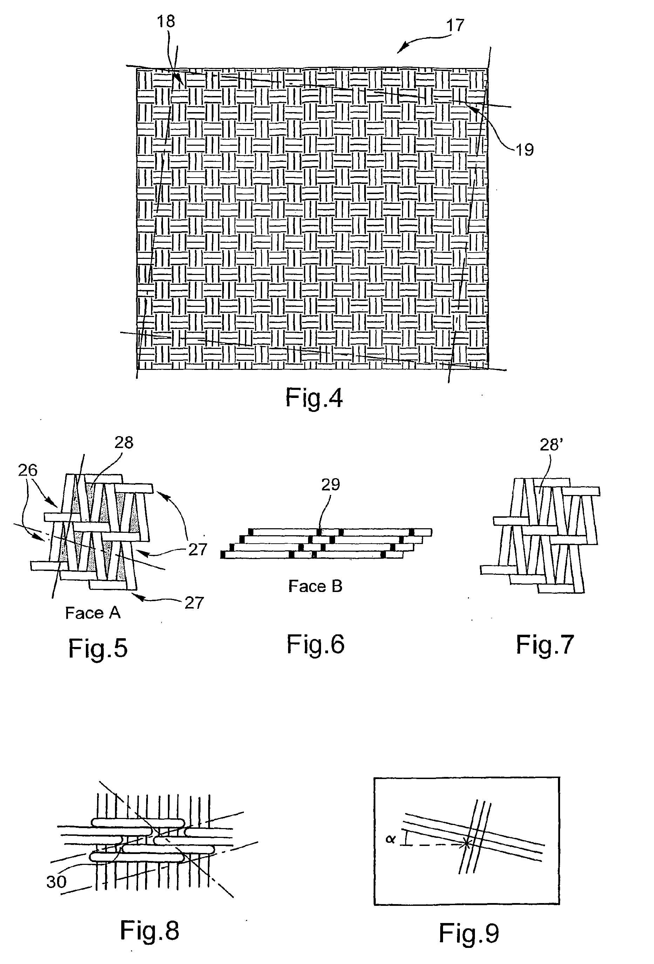

Suivant un premier mode de réalisation de l'invention, tel que représenté à la figure 4, l'écran de projection est réalisé à partir d'une feuille 17 tissée de manière que les fils de chaîne 18 et les fils de trame 19 paraissent jointifs quand on les regarde suivant une direction approximativement normale au plan de l'écran.

Les fils étant entrelacés selon un motif simple, à savoir celui de la toile, mais en étant appariés, il y a des différences sensibles de forme ou d'orientation entre les divers passages, selon qu'ils sont situés, ou non, entre les deux fils de chaîne tout en étant situés, ou non, entre les deux fils de trame.

Ces fils en eux-mêmes présentent un diamètre compris entre 0.02 et 0.2 mm.

Ainsi, le pas d'un réseau éventuellement visible d'un tel tissu est 10 à 100 fois plus fin que celui de la projection d'une matrice SXGA (1200 x 1024 pixels), qui est actuellement la résolution la plus courante des projecteurs à usage domestique, projetée sur un écran de 2.40 m de base.

Ce pas reste d'un ordre de grandeur très différent de celui des matrices projetées des projecteurs offrant les résolutions les plus élevées envisageables dans un futur proche.

L'écran est obtenu par inclinaison α de la feuille par rotation dans son plan, afin que les fils de chaîne et de trame forment un angle quelconque non nul par rapport aux bords de l'écran. Cet angle α sera avantageusement compris entre 5 et 25° (voir la figure 9).

A cet effet, la découpe de la pièce rectangulaire constituant l'écran peut être réalisée en biais dans le tissu, suivant cet angle de biais (voir les lignes en traits mixtes de la figure 4).

Une telle inclinaison peut être appliquée à toute structure de passages, même classique, afin de s'écarter autant que possible d'un réseau périodique d'une structure de pixels projetée, dont les bords sont en pratique parallèles aux alignements principaux de ce réseau.

En pratique, on a constaté que la projection d'une image vidéo sur un écran de base comprise entre 1.80 m et 3 m réalisé selon ce premier mode de réalisation de l'invention ne produisait pas de moirage visible avec les projecteurs existant.

Il peut être noté que, du fait de la géométrie des passages particuliers de ce mode de réalisation, la progression de l'onde sonore à travers le tissu se fait, dans l'intégralité de la bande de fréquences audibles, par diffraction autour des fils, puisque ceux-ci sont en pratique de diamètre inférieur à la longueur d'onde à la fréquence maximum audible (17.15 mm).

Un deuxième mode de réalisation d'un écran selon l'invention, représenté aux figures 5 à 7, met en oeuvre une surface de projection 25 constituée d'un tissu de type satiné, parfois également appelé tweed, et similaire au mode de tissage des jeans.

Un tel tissu présente deux faces d'aspect inégal, une face A étant représentée à la figure 5 et une face B représentée à la figure 6.

De manière générale, cette feuille présente une double structure, l'une classique de chaîne et trame, orthogonale, et l'autre en biais, selon un angle par exemple de l'ordre de 30°.

Les figures 5 et 6 présentent le tissu avec un éclairage suivant une direction globalement oblique par rapport au plan du tissu. Un tel éclairage met en évidence le relief du tissu, qui présente globalement des rangées obliques (Fig. 6A) 26 en forme de sillons, bordées de reliefs 27. La hauteur des reliefs 27 par rapport aux sillons 26 est sensiblement égale au diamètre du fil.

L'éclairage oblique accentue, par des ombres, les interstices 28 entre les fils, lesquels ne correspondent pas aux interstices 29 visibles sur la face B du tissu.

La figure 7 montre la face A du tissu mis en oeuvre dans ce mode de réalisation de l'invention, éclairée suivant une direction sensiblement normale au plan du tissu. Sous cet éclairage, qui correspond à celui produit par un projecteur vidéo en fonctionnement, les passages 28' entre les fils ne sont pas (ou peu) apparents, du fait de la différence de leur position sur les faces A et B.

Il en découle que, indépendamment de l'inclinaison des fils individuels, les passages destinés à la traversée de la feuille par les ondes sonores présentent des alignements qui sont inclinés par rapport aux bords (voir les traits mixtes). A titre avantageux, ces passages ont en outre une orientation et une géométrie qui varie au travers de la feuille et d'un passage à un passage adjacent.

Ainsi, le tissu est pratiquement opaque à la lumière, et ne présente, en projection vidéo, aucune structure parallèle aux bords qui soit clairement visible et susceptible d'interférer optiquement, de manière rédhibitoire, avec une grille projetée sur l'écran.

Un avantage de ce mode de réalisation, en plus de l'effet favorable de l'inclinaison des alignements de passages qui peuvent être détectés, est de permettre une dissimulation au moins approximative des passages 28' entre les fils, permettant à ceux-ci d'offrir néanmoins une dimension suffisante pour optimiser la perméabilité de l'écran 25 à l'air, et donc aux ondes sonores.

De préférence, mais de manière non limitative, on choisira du fil de polychlorure vinyle muni d'une âme fibreuse, par exemple en fibre de verre, de carbone ou de kevlar.

De préférence également, mais de manière non limitative, le diamètre du fil sera choisi entre 0.1 mm et 0.17 mm.

De manière également préférée, les espacements entre les fils ne dépassent pas 0,3 mm.

Avantageusement, comme dans le mode de réalisation précédent, on incline la feuille par rotation dans son plan que la feuille, afin que même les fils de chaîne et de trame forment un angle quelconque non nul par rapport aux bords de l'écran.

Un autre mode de réalisation est schématisé à la figure 8 où l'on observe, sur la face avant du tissu considéré, qu'il s'agit de fils de trame individuels qui sont entrelacés avec des paires de fils de chaîne (en passant à chaque fois devant trois telles paires, avec un décalage d'une paire en passant d'un fil de trame au suivant. La face arrière d'un tel tissu est analogue à ce qui est représenté à la figure 7, c'est à dire que les paires de fils de chaîne sont dédoublées sur la face arrière.

Ce type de tissage offre également des passages 30 disposés en réseau, mais présentant une inclinaison significative des alignements de passages par rapport aux bords (voir les traits mixtes).

Ainsi, même si l'on ne peut pas vraiment dire que les passages ne sont pas visibles, les éventuels alignements qui peuvent être décelés ont des inclinaisons significatives par rapport aux bords, grâce à quoi il y a une réduction significative des risques de formation de moirés.

Un autre mode de réalisation de l'écran met en oeuvre un tissu du genre crêpe ou piqué. Un tel tissu peut être préférentiellement tricoté, tissé ou non tissé.

De préférence, on choisira un tissu crêpe ou piqué tricoté à partir de fil bouclé, d'un diamètre compris entre 0.02 mm et 0.1 mm.

De préférence, on choisira un fil synthétique, polyester ou acrylique.

Quoiqu' obtenu selon un mode de tissage pouvant être très simple, un tissu de ce genre, en raison du crêpage et/ou des boucles du fil qui produisent un effet d'enchevêtrement dans les passages, a pour particularité de n'offrir aucune structure périodique visible, et donc aucun alignement de passages aisément détectable. Quelle que soit la dimension de l'image, et la résolution du projecteur, aucune interférence optique ne se produit quand une grille de pixels est projetée.

Un tissu en général présente une résistance à la pénétration de l'air selon sa densité. Réduire sa densité permet d'améliorer sa perméabilité à l'air, et donc aux ondes sonores, mais en réduit l'opacité à la lumière, ce qui nuit à la qualité de reproduction de l'image projetée.

On a constaté qu'un écran en tissu du genre crêpe ou piqué offre une opacité et une perméabilité à l'air optimum pour une densité comprise entre 150 et 220 g/m2.

Un autre mode de réalisation de l'invention consiste à créer des passages dans une feuille pleine sous la forme de fentes en biais par rapport au plan de la feuille, de manière qu'ils n'apparaissent pas en tant que perforations dans le plan de la feuille.

Il ressort de ce qui précède qu'on peut réaliser un écran selon l'invention en faisant pivoter dans son plan une feuille présentant une structure quelconque de passages de manière à ce que cette structure se trouve de biais par rapport aux bords de l'écran, de préférence selon un angle de 5 à 25° (voir la figure 9).

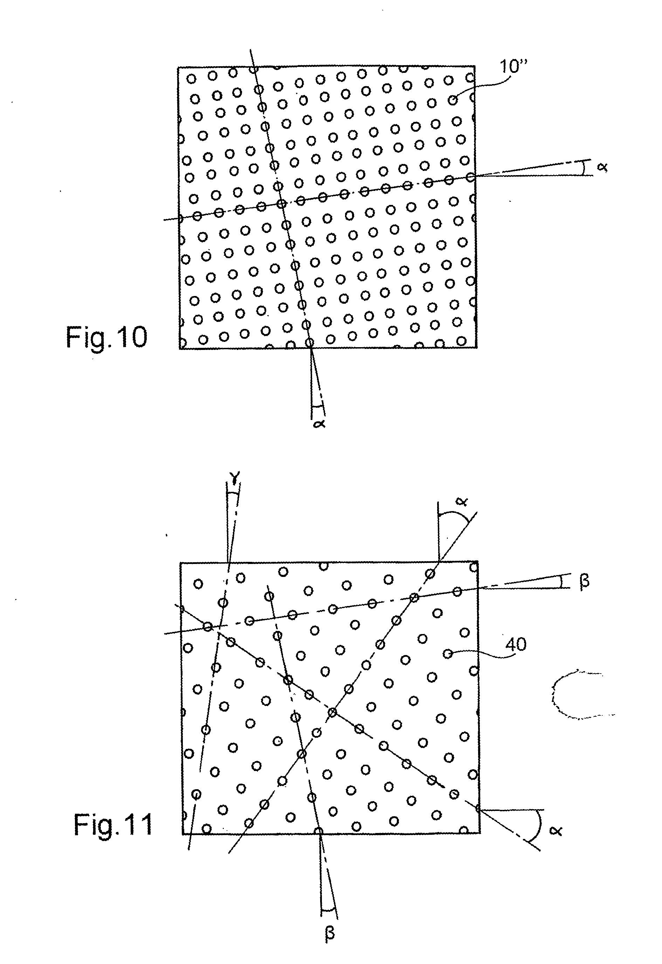

C'est ainsi que la figure 10 représente un écran dont les bords ont été taillés en biais dans une feuille du genre de celle de la figure 2 ; on y identifie aisément le réseau à mailles carrées de la figure 2 (les passages 10" correspondent aux passages 10' de la figure 2).

En ce qui concerne la figure 11, on y observe un réseau de passages 40 qui peut être défini de plusieurs manières. Si l'on considère les deux orientations d'inclinaison α par rapport aux bords horizontaux et verticaux de l'écran, on observe un réseau à mailles carrées. Si, par contre, on considère les deux orientations d'inclinaison β par rapport aux mêmes bords horizontaux et verticaux de l'écran, on observe un réseau en quinconce. Enfin, si l'on considère une direction d'inclinaison α par rapport à l'un des côtés de l'écran en combinaison avec une direction d'inclinaison β par rapport à un autre côté de cet écran, on observe un réseau à maille parallélépipédique non rectangle. En outre, on peut identifier bien d'autres alignements, tel que celui caractérisé par une inclinaison γ. Conformément à l'invention, au moins les principaux d'entre ces alignements, donc les plus denses, présentent une inclinaison non nulle par rapport aux bords de l'écran.

En complément d'une feuille d'un type précédemment décrit, l'écran peut comporte une deuxième couche sensiblement superposée à la première, placée derrière ladite première couche par rapport au flux lumineux du projecteur, ladite deuxième couche étant perméable aux ondes sonores.

Dans tous les modes de réalisation décrits de la présente invention, le tissu mis en oeuvre pour constituer une surface de projection d'écran est de préférence blanc. Cependant, dans certaines applications, on peut envisager la mise en oeuvre de tissus gris clair, ou ayant une autre couleur proche du blanc, voire différente.

## Revendications

1. Installation de projection vidéo à pixels fixes comportant un écran (4) de projection et une source sonore (6) disposée derrière cet écran, cet écran comportant une feuille (17) ayant une face de projection et munie d'une pluralité de passages adaptés à permettre la traversée de cette feuille (17) par des ondes sonores émises par la source sonore, **caractérisée en ce que** la disposition des passages (28, 28', 29, 30, 10") de cette pluralité est telle que les alignements les plus denses qu'on peut y détecter présentent une inclinaison non nulle par rapport aux bords verticaux et horizontaux de l'écran, en sorte de minimiser les risques de coïncidence entre les alignements verticaux et horizontaux des structures de pixels de l'image projetée et la structure de passages de l'écran de projection.

2. Installation de projection vidéo selon la revendication 1, **caractérisée en ce qu'**il comporte en outre un projecteur à pixels fixes disposé devant cet écran.

3. Installation de projection vidéo selon la revendication 1 ou la revendication 2, **caractérisée en ce que** l'écran a une base comprise entre 1,80m et 3m.

4. Installation de projection vidéo selon l'une quelconque des revendications 1 à 3, **caractérisée en ce que** cette pluralité de passages présente des variations substantielles de géométrie ou d'orientation.

5. Installation de projection vidéo selon l'une quelconque des revendications 1 à 4, **caractérisée en ce que** ladite feuille (17) est perforée.

6. Installation de projection vidéo selon la revendication 5, **caractérisée en ce que** les trous de perforation ont un diamètre de 0,5 mm.

7. Installation de projection vidéo selon l'une quelconque des revendications 1 à 4, **caractérisée en ce que** ladite feuille (17) est tissée.

8. Installation de projection vidéo selon la revendication 7, **caractérisée en ce que** les fils de trame et les fils de chaîne ont un diamètre compris entre 0,02mm et 0,2mm.

9. Installation de projection vidéo selon la revendication 7 ou la revendication 8, **caractérisée en ce que** les fils de chaîne (18) et les fils de trame (19) sont entrelacés par paires.

10. Installation de projection selon la revendication 7 ou la revendication 8, **caractérisée en ce que** ladite feuille est un tissage d'un nombre différent de fils de chaîne (18) et de fils de trame (19), formant ainsi des alignements inclinés de passages (30).

11. Installation de projection vidéo selon la revendication 7 ou la revendication 8, **caractérisée en ce que** la feuille présente, sur la face de projection, des côtes (26, 27) inclinées par rapport aux directions générales des fils de chaîne (18) et des fils de trame (19).

12. Installation de projection vidéo selon l'une quelconque des revendications 7 à 11, **caractérisée en ce que** les fils de trame et les fils de chaîne forment un angle non nul par rapport aux bords de l'écran.

13. Installation selon la revendication 12, **caractérisée en ce que** cet angle est compris entre 5° et 25°.

14. Installation selon l'une quelconque des revendications 7 à 13, **caractérisée en ce que** le diamètre des fils est compris entre 0,1 mm et 1,7mm.

15. Installation de projection vidéo selon l'une quelconque des revendications 7 à 14, **caractérisée en ce que** les espacements entre les fils ne dépassent pas 0.3 mm.

16. Installation de projection vidéo selon l'une quelconque des revendications 7 à 15, **caractérisée en ce que** le tissage utilise du fil enrobé de polyvinyle chlorure.

17. Installation de projection vidéo selon l'une quelconque des revendications 1 à 4, **caractérisée en ce que** ladite feuille est en fil tricoté.

18. Installation de projection vidéo selon l'une quelconque des revendications 1 à 4 et 7 à 17, **caractérisé en ce que** le fil est bouclé.

19. Installation de projection vidéo selon la revendication 18, **caractérisée en ce que** le diamètre de fil est compris entre 0,02mm et 0,1mm.

20. Installation de projection vidéo selon la revendication 18 ou la revendication 19, **caractérisée en ce que** le fil est en polyester.

21. Installation de projection vidéo selon l'une quelconque des revendications 1 à 4 et 7 à 20, **caractérisée en ce qu'**aucune trame n'est apparente.

22. Installation de projection vidéo selon l'une quelconque des revendications 1 à 4 et 7 à 21, **caractérisée en ce que** ladite surface est en un tissu crêpe ou piqué.

23. Installation de projection vidéo selon la revendication 22, **caractérisée en ce que** ledit tissu a une densité comprise entre 150 et 220 g/m².

24. Installation de projection selon l'une quelconque des revendications 1à 4 7, 8 et 10 à 16, **caractérisée en ce que** la feuille est tissée et est du type satiné.

25. Installation de projection selon l'une quelconque des revendications 1 à 4, 7, 8 et 10 à 16, **caractérisée en ce que** la feuille est tissée et est du type tweed.

26. Installation de projection vidéo selon l'une quelconque des revendications précédentes, **caractérisé en ce qu'**il comporte une deuxième couche sensiblement superposée à la première, placée derrière ladite première couche par rapport au flux lumineux du projecteur, ladite deuxième couche étant perméable aux ondes sonores.

## Claims

1. Fixed pixel video projection installation comprising a projection screen (4) and a sound source (6) disposed behind said screen, said screen including a sheet (17) having a projection face and provided with a plurality of passages adapted to allow sound waves emitted by the sound source to pass through said sheet (17), **characterised in that** the disposition of the passages (28, 28', 29, 30, 10'') of said plurality is such that the most dense alignments thereof that can be detected have a non-zero inclination relative to the vertical and horizontal edges of the screen so as to minimize the risk of coincidence between the vertical and horizontal alignments of the projected image pixel structures and the projection screen passage structure.

2. Video projection installation according to claim 1, **characterised in that** it furthermore comprises a projector with fixed pixels that is arranged in front of this screen.

3. Video projection installation according to claim 1 or claim 2, **characterised in that** the screen has a base of between 1.80 m and 3 m.

4. Video projection installation according to any one of claims 1 to 3, **characterised in that** this plurality of passages has substantial geometry or orientation variations.

5. Video projection installation according to any one of claims 1 to 4, **characterised in that** said sheet (17) is perforated.

6. Video projection installation according to claim 5, **characterised in that** the perforation holes have a diameter of 0.5 mm.

7. Video projection installation according to any one of claims 1 to 4, **characterised in that** said sheet (17) is woven.

8. Video projection installation according to claim 7, **characterised in that** the weft threads and the warp threads have a diameter of between 0.02 mm and 0.2 mm.

9. Video projection installation according to claim 7 or claim 8, **characterised in that** the warp threads (18) and the weft threads (19) are interleaved in pairs.

10. Projection installation according to claim 7 or claim 8, **characterised in that** said sheet is a weave of a different number of warp threads (18) and of weft threads (19), thus forming inclined alignments of passages (30).

11. Video projection installation according to claim 7 or claim 8, **characterised in that** the sheet has ribs (26, 27) on the projection face inclined relative to the general directions of the warp (18) and weft (19) threads.

12. Video projection installation according to any one of claims 7 to 11, **characterised in that** the weft threads and the warp threads form a non-zero angle with respect to the edges of the screen.

13. Installation according to claim 12,
**characterised in that** this angle is between 5° and 25°.

14. Installation according to any one of claims 7 to 13, **characterised in that** the diameter of the threads is between 0.1 mm and 1.7 mm.

15. Video projection installation according to any one of claims 7 to 14, **characterised in that** the spacings between the threads do not exceed 0.3 mm.

16. Video projection installation according to any one of claims 7 to 15, **characterised in that** weaving utilises threads coated with polyvinyl chloride.

17. Video projection installation according to any one of claims 1 to 4, **characterised in that** said sheet is of knitted thread.

18. Video projection installation according to any one of claims 1 to 4 and 7 to 17, **characterised in that** the thread is a bouclé thread.

19. Video projection installation according to claim 18, **characterised in that** the thread diameter is between 0.02 mm and 0.1 mm.

20. Video projection installation according to claim 18 or claim 19, **characterised in that** the thread is a polyester thread.

21. Video projection installation according to any one of claims 1 to 4 and 7 to 20, **characterised in that** no weft threads are apparent.

22. Video projection installation according to any one of claims 1 to 4 and 7 to 21, **characterised in that** said surface is a crepe or pique woven material surface.

23. Video projection installation according to claim 22, **characterised in that** said woven has a density of between 150 and 220 g/m².

24. Projection installation according to any one of claims 1 to 4, 7, 8 and 10 to 16, **characterised in that** the sheet is a woven sheet of the satin type.

25. Projection installation according to any one of claims 1 to 4, 7, 8 and 10 to 16, **characterised in that** the sheet is a woven sheet of the tweed type.

26. Video projection installation according to any one of the preceding claims, **characterised in that** it includes a second layer that is permeable to sound waves, substantially superposed on the first layer and placed behind said first layer relative to the light flux from the projector.

## Patentansprüche

1. Videoprojektionsanlage mit festen Pixeln, die einen Projektionsschirm (4) und eine hinter diesem Schirm angeordnete Schallquelle (6) aufweist, wobei dieser Schirm eine Folie (17) aufweist, die eine Projektionsseite hat und mit einer Vielzahl von Durchlässen versehen ist, welche geeignet sind, um die Durchquerung dieser Folie (17) durch von der Schallquelle ausgesendete Schallwellen zu erlauben, **dadurch gekennzeichnet, dass** die Anordnung der Durchlässe (28, 28', 29, 30, 10") dieser Vielzahl so ist, dass die dichtesten Fluchtlinien, die man dort erfassen kann, eine Neigung ungleich Null bezüglich der senkrechten und waagrechten Ränder des Schirms haben, um die Gefahren der Koinzidenz zwischen den senkrechten und waagrechten Fluchtlinien der Pixelstrukturen des projizierten Bilds und der Struktur von Durchlässen des Projektionsschirms zu minieren.

2. Videoprojektionsanlage nach Anspruch 1, **dadurch gekennzeichnet, dass** sie außerdem einen Projektor mit festen Pixeln aufweist, der vor diesem Bildschirm angeordnet ist.

3. Videoprojektionsanlage nach Anspruch 1 oder 2, **dadurch gekennzeichnet, dass** der Schirm eine Basis hat, die zwischen 1,80 m und 3 m liegt.

4. Videoprojektionsanlage nach einem der Ansprüche 1 bis 3, **dadurch gekennzeichnet, dass** diese Vielzahl von Durchlässen wesentliche Geometrie- oder Ausrichtungsänderungen hat.

5. Videoprojektionsanlage nach einem der Ansprüche 1 bis 4, **dadurch gekennzeichnet, dass** die Folie (17) perforiert ist.

6. Videoprojektionsanlage nach Anspruch 5, **dadurch gekennzeichnet, dass** die Perforationslöcher einen Durchmesser von 0,5 mm haben.

7. Videoprojektionsanlage nach einem der Ansprüche 1 bis 4, **dadurch gekennzeichnet, dass** die Folie (17) gewebt ist.

8. Videoprojektionsanlage nach Anspruch 7, **dadurch gekennzeichnet, dass** die Schussfäden und die Kettfäden einen Durchmesser zwischen 0,02 mm und 0,2 mm haben.

9. Videoprojektionsanlage nach Anspruch 7 oder Anspruch 8, **dadurch gekennzeichnet, dass** die Kettfäden (18) und die Schussfäden (19) paarweise verflochten sind.

10. Projektionsanlage nach Anspruch 7 oder Anspruch 8, **dadurch gekennzeichnet, dass** die Folie ein Gewebe aus einer unterschiedlichen Anzahl von Kettfäden (18) und von Schussfäden (19) ist, wodurch geneigte Fluchtlinien von Durchlässen (30) gebildet werden.

11. Videoprojektionsanlage nach Anspruch 7 oder Anspruch 8, **dadurch gekennzeichnet, dass** die Folie auf der Projektionsseite bezüglich der allgemeinen Richtungen der Kettfäden (18) und der Schussfäden (19) geneigte Rippen (26, 27) aufweist.

12. Videoprojektionsanlage nach einem der Ansprüche 7 bis 11, **dadurch gekennzeichnet, dass** die Schussfäden und die Kettfäden einen Winkel ungleich Null bezüglich der Ränder des Schirms bilden.

13. Anlage nach Anspruch 12, **dadurch gekennzeichnet, dass** dieser Winkel zwischen 5° und 25° liegt.

14. Anlage nach einem der Ansprüche 7 bis 13, **dadurch gekennzeichnet, dass** der Durchmesser der Fäden zwischen 0,1 mm und 1,7 mm liegt.

15. Videoprojektionsanlage nach einem der Ansprüche 7 bis 14, **dadurch gekennzeichnet, dass** die Abstände zwischen den Fäden 0,3 mm nicht überschreiten.

16. Videoprojektionsanlage nach einem der Ansprüche 7 bis 15, **dadurch gekennzeichnet, dass** das Gewebe einen mit Polyvinylchlorid umhüllten Faden verwendet.

17. Videoprojektionsanlage nach einem der Ansprüche 1 bis 4, **dadurch gekennzeichnet, dass** die Folie aus gestricktem Faden ist.

18. Videoprojektionsanlage nach einem der Ansprüche 1 bis 4 und 7 bis 17, **dadurch gekennzeichnet, dass** der Faden geschlungen ist.

19. Videoprojektionsanlage nach Anspruch 18,
**dadurch gekennzeichnet, dass** der Fadendurchmesser zwischen 0,02 mm und 0,1 mm liegt.

20. Videoprojektionsanlage nach Anspruch 18 oder Anspruch 19, **dadurch gekennzeichnet, dass** der Faden aus Polyester ist.

21. Videoprojektionsanlage nach einem der Ansprüche 1 bis 4 und 7 bis 20, **dadurch gekennzeichnet, dass** kein Raster sichtbar ist.

22. Videoprojektionsanlage nach einem der Ansprüche 1 bis 4 und 7 bis 21, **dadurch gekennzeichnet, dass** die Fläche aus einem Krepp- oder Pikeegewebe ist.

23. Videoprojektionsanlage nach Anspruch 22,
**dadurch gekennzeichnet, dass** das Gewebe eine Dichte zwischen 150 und 220 g/m² hat.

24. Projektionsanlage nach einem der Ansprüche 1 bis 4, 7, 8 und 10 bis 16, **dadurch gekennzeichnet, dass** die Folie gewebt und vom satinierten Typ ist.

25. Videoprojektionsanlage nach einem der Ansprüche 1 bis 4, 7, 8 und 10 bis 16, **dadurch gekennzeichnet, dass** die Folie gewebt und vom Typ Tweed ist.

26. Videoprojektionsanlage nach einem der vorhergehenden Ansprüche, **dadurch gekennzeichnet, dass** sie eine zweite, die erste im Wesentlichen überlagernde Schicht aufweist, die bezüglich des Lichtstroms des Projektors hinter der ersten Schicht angeordnet ist, wobei die zweite Schicht für die Schallwellen durchlässig ist.
